# EUROPÄISCHE PATENTSCHRIFT

(11) **EP 2 011 680 B1**
(45) Veröffentlichungstag und Bekanntmachung des Hinweises auf die Patenterteilung: **08.12.2010**
(21) Anmeldenummer: 08104387.9
(22) Anmeldetag: 12.06.2008
(51) Int. Cl.: B60J 5/14, B60J 5/08, E06B 9/58

(54) **Fahrzeugrolltor**
Automobile rolling door
Porte roulante de véhicule

(30) Priorität: 05.07.2007 DE 202007009449 U
(43) Veröffentlichungstag der Anmeldung: 07.01.2009
(73) Patentinhaber: WIHAG Fahrzeugbausysteme GmbH, 33602 Bielefeld (DE)
(72) Erfinder: Kottkamp, Uwe, 32312 Lübbecke (DE)
(74) Vertreter: Dantz, Jan Henning

(56) Entgegenhaltungen:
- DE-A1- 10 230 445
- DE-A1- 19 828 186
- DE-U1- 9 211 848
- US-A- 3 570 579

## Beschreibung

Die Erfindung betrifft ein Fahrzeugrolltor mit einem plattenförmigen Füllungselement, welches aus Lamellen besteht, deren einander zugewandte, quer zur Verschieberichtung verlaufende Randbereiche durch flexible, sich über die gesamte Breite des Füllungselementes erstreckende Profilstränge gelenkig miteinander verbunden sind.

Das in Rede stehende Fahrzeugrolltor wird in bevorzugter Weise zur Freigabe und zum Verschließen der heckseitigen Ladeöffnung eines kofferartigen Fahrzeugaufbaus verwendet. An den heckseitigen Endbereichen der beiden Seitenwände des Kofferaufbaus sowie an der Decke sind die Laufschienen befestigt. Dazu sind die Lamellen durch seitlich nach außen im Versatz zu den beiden Stirnflächen der Lamellen stehende Führungsrollen geführt, die in die Laufschienen eingreifen. Die Führungsrollen sind auf Lagerbolzen frei drehbar gelagert, die in Lagerbolzenaufnahmen des Füllungselementes eingesetzt sind. Wenn die Ladeöffnung zum Be- oder Entladen freigegeben wird, wird demzufolge das Füllungselement unter die Decke geschoben. Die Breite des Füllungselementes ist an die Breite des Aufbaus des Fahrzeuges angepasst. Die Anzahl der das Füllungselement bildenden Lamellen richtet sich nach der Höhe des Fahrzeugaufbaus und der Höhe der einzelnen Lamellen.

Bei den bislang bekannten Fahrzeugrolltoren sind die Lamellen aus Plywood oder als Hohlprofile ausgebildet und aus einem geeigneten Kunststoff oder aus Aluminium gefertigt. Die Verbindungen der quer zur Verschieberichtung verlaufenden Randbereiche der Lamellen können durch Scharniere erfolgen oder die Randbereich der Lamellen sind so profiliert, dass sie formschlüssig ineinander greifen.

Die in Rede stehenden Fahrzeugrolltore haben sich in der Praxis außerordentlich bewährt. Es wird jedoch die Verbindung der einzelnen Lamellen mittels Scharnieren als zu aufwendig angesehen, da die Montagezeit relativ hoch ist. Sofern die Randbereiche der Lamellen profiliert sind, sind aufwendige Werkzeuge notwendig, so dass der Preis der Lamellen entsprechend hoch ist.

Aus der gattungsgemäßen DE 198 28 186 A1 ist eine Gelenkeinrichtung bekannt, die insbesondere für Rollladen- oder Falltürelemente ausgelegt ist. Die einzelnen Lamellen sind als Hohlprofile ausgebildet und so ausgelegt, dass die Lamellen über Verbindungselemente miteinander verbunden sind, und die innerhalb der Hohlprofile angeordnet sind. Diese Verbindungselemente bestehen aus einem äußerst flexiblen Kunststoff. Zumindest in den Endbereichen sind diese Verbindungselemente schlauchförmig verdickt.

Die Dichtwirkung dieser Verbindungselemente ist zwar gegeben, doch werden sie beim Öffnen und Schließen eines Rolltores beim Umlenken extrem stark gedehnt. Außerdem muss zum Auswechseln der Verbindungselemente das plattenförmige Füllungselement komplett aus den Führungsschienen herausgenommen werden.

Aus der US 3,570,579 ist ein aus Lamellen gebildetes plattenförmiges Füllungselement bekannt, bei dem die Randbereiche der Lamellen hakenförmig gestaltet sind. Zwei angrenzende Lamellen sind über ein entsprechend gestaltetes Scharnier miteinander gelenkig verbunden. Das Scharnier erstreckt sich über die gesamte Breite des Füllungselementes. Bei dieser Ausführung treten die eingangs erwähnten Nachteile hinsichtlich der Verwendung von Scharnieren auf.

Aus der DE 92 11 848 U1 ist ein Sektionaltor oder ein Deckengliedertor bekannt, bei dem die Lamellen über Scharniere verbunden sind. Die Lamellen sind an einer Seite mit Nuten versehen, in die Stege der Lamellen eingreifen. In diese Nuten werden Schenkel der Scharnierteile von der Seite her eingesteckt. Auch bei dieser Ausführung gelten die bereits aufgeführten Nachteile hinsichtlich der Verwendung von Scharnieren.

Der Erfindung liegt die Aufgabe zugrunde, ein Fahrzeugrolltor der eingangs näher beschriebenen Art so zu gestalten, dass kostengünstig zu beziehende Lamellen verwendet werden können, und dass die gelenkigen Verbindungen konstruktiv einfach ausgebildet und in kürzester Zeit zu montieren sind und eine sehr gute Dichtigkeit hergestellt ist.

Die gestellte Aufgabe wird dadurch gelöst, dass die Querschnitte der Profilstränge T-förmig ausgebildet sind, dass die quer zur Verschieberichtung des Füllungselementes stehenden Flächen der Lamellen wenigstens außenseitig glattflächig sind und in Abständen zueinander stehen, dass die mittleren Stege der Profilstränge zwischen den einander zugewandt liegenden Flächen von zwei angrenzenden Lamellen liegen, und dass die beidseitig der mittleren Stege rechtwinklig dazu stehenden Stege der Profilstränge dichtend an den Außenflächen der Lamellen anliegen und durch im Abstand zueinander angeordnete Klemmvorrichtungen festgelegt sind.

Die flexiblen Profilstränge sind so ausgelegt, dass die zwischen den Lamellen liegenden Fugen abgedeckt werden. Dadurch wird eine Dichtwirkung erzielt, so dass der Laderaum eines Fahrzeuges gegen Umwelteinflüsse geschützt ist. Da die Profilstränge außerdem flexibel sind, ist die Beweglichkeit der Lamellen beim Verschieben des Füllungselementes gesichert. Die jeweils zwei Lamellen verbindende Sicherungsvorrichtung ist konstruktiv einfach aufgebaut und in kürzester Zeit zu montieren bzw. im Bedarfsfall auch zu demontieren.

Da zumindest die quer zur Verschieberichtung stehenden Stege der Lamellen wenigstens an der Außenseite glattflächig sind und im Abstand zueinander stehen, und dass jeweils ein Schenkel der Profilstränge zwischen den einander zugewandt liegenden Flächen der Lamellen liegt, und diese Stege ebenfalls flexibel sind, können sie so ausgelegt sein, dass sie ein klein wenig unter Spannung stehen, wenn sich das Fahrzeugrolltor in der Schließlage befindet. Dadurch wird die Dichtwirkung noch erhöht. Wenn sich die Lamellen im bogenförmigen Bereich der Laufschienen befinden, können sie sich entsprechend der Bewegung der Lamellen noch zusätzlich verformen.

Da die Profilstränge in den Querschnitten T-förmig ausgebildet sind, greift dann der Mittelsteg in den Spalt zwischen zwei angrenzenden Lamellen ein. Die rechtwinklig dazu stehenden Teilabschnitte jedes Steges liegen dann ebenfalls dichtend an den Randbereichen der Lamellen an. Ein solches Profil wird im Extrusionsverfahren hergestellt und ist demzufolge recht kostengünstig.

Es ist ferner noch vorgesehen, das die Profilstränge an den äußeren, den Lamellen abgewandten Seiten nutartige Einziehungen aufweisen, die in gleichen Abständen zu den seitlichen Kanten enden.

In konstruktiv einfacher Weise ist jede Sicherungsvorrichtung für zwei angrenzende Lamellen aus im Abstand zueinander angeordneten Klemmvorrichtungen gebildet.

Es ist ferner noch vorgesehen, dass jede Klemmvorrichtung zwei Profilabschnitte beinhaltet, von denen jeweils einer mittels mechanischer Verbindungselemente an den Randbereich der zugehörigen Lamelle festgelegt ist. Als mechanisches Verbindungselement kommt in bevorzugter Ausführung wenigstens eine Schraube mit einer Mutter in Betracht. Die Profilabschnitte sind so ausgelegt, dass sie zumindest an den seitlichen Randbereichen der an den Lamellen anliegenden Profilstränge spaltfrei anliegen. Auch können diese die Profilabschnitte kontaktierenden Streifen unter einer Spannung stehen.

In der einfachsten Ausführung ist vorgesehen, dass die Profilabschnitte als Winkelprofilabschnitte ausgebildet sind. Ferner sind diese Winkelprofilabschnitte ungleichschenklig, wobei die kürzeren Schenkel senkrecht zu den Lamellen stehen. Die Klemmvorrichtungen richten sich nach der Breite des Rolltores und gehen über die gesamte Breite der Lamelle.

Zusätzlich wird an den Klemmvorrichtungen seitlich eine Aufnahme für einen Lagerbolzen angebracht, in dem dann die in der Laufschiene geführte Laufrolle frei drehbar gelagert ist.

Damit die Sicherungsvorrichtungen in der Schließlage des Rolltores unzugänglich sind, ist vorgesehen, dass diese laderaumseitig an dem Füllungselement angeordnet sind.

Damit die einzelnen Lamellen kostengünstig sind, ist vorgesehen, dass diese aus Kunststoffprofilen, insbesondere aus massiven Kunststoffprofilen mit glatten Außenflächen gebildet sind.

Anhand der beiliegenden Zeichnungen wird die Erfindung noch näher erläutert.

Es zeigen:
- Figur 1: eine Teilansicht eines Rolltores mit Blick auf die Außenseite in der Schließlage
- Figur 2: eine seitliche Ansicht und
- Figur 3: eine Einzelheit III in der Figur 2 in vergrößerter Darstellung.

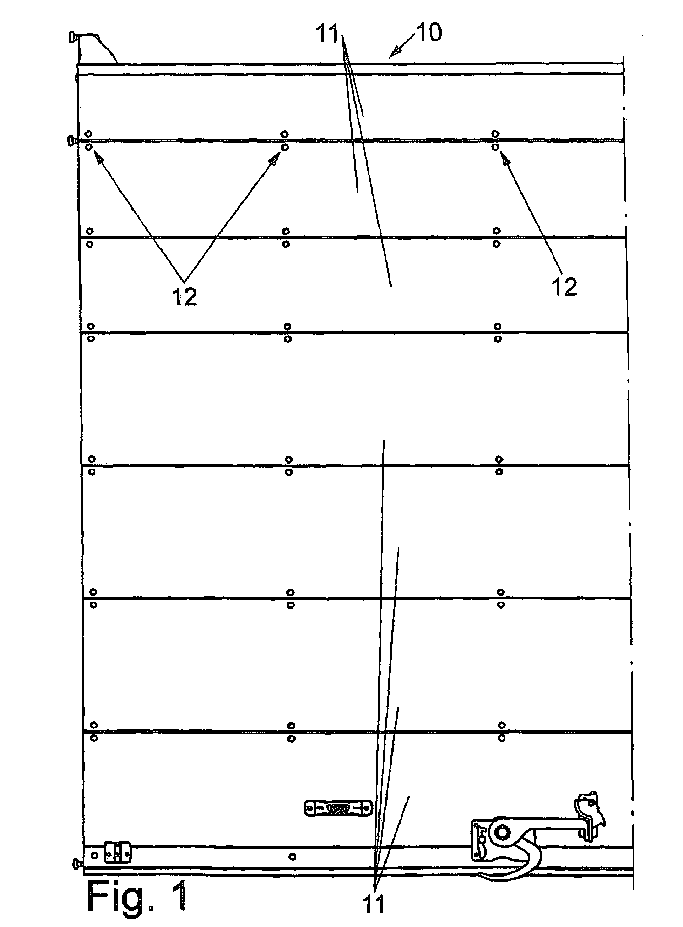

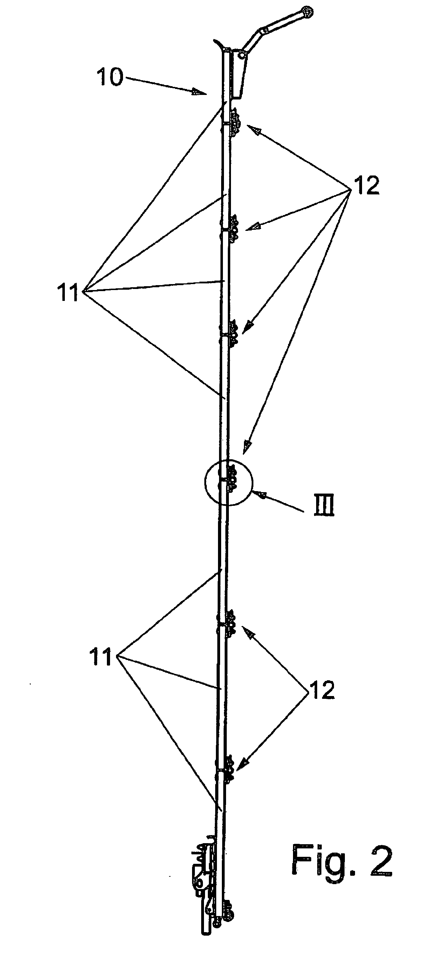

Aus Gründen einer vereinfachten Darstellung sind in den Figuren 1 und 2 nur die Füllungselemente 10 des erfindungsgemäßen Fahrzeugrolltores dargestellt. Die seitlichen Lagerbolzen, die darauf frei drehbar gelagerten Laufrollen und die Laufschienen sind nicht dargestellt. Das Füllungselement 10 besteht aus mehreren Lamellen 11, die in noch näher erläuterter Weise gelenkig miteinander verbunden sind. Die Lamellen 11 sind aus massiven Kunststoffprofilen mit glatten Außenflächen gefertigt.

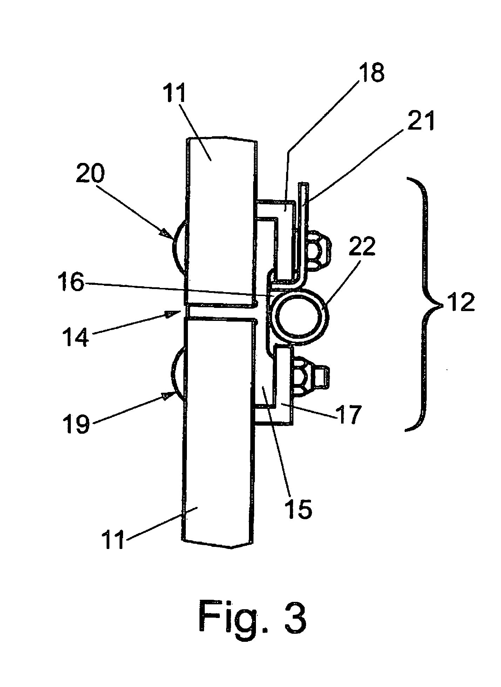

Wie in den Figuren 1 und 2 dargestellt, sind zwei angrenzende Lamellen 11 über im Abstand zueinander angeordnete Klemmvorrichtungen 12 sowie flexible Profilstränge 15 gelenkig miteinander verbunden. Die Klemmvorrichtungen 12 bilden Sicherungsvorrichtungen. Die Glattflächigkeit der Flächen der Lamellen 11 zeigt insbesondere die Figur 3. Ferner zeigt diese Figur, dass zwei angrenzende Lamellen 11 im Abstand zueinander stehen. In diesen Spalt ragt ein Steg 14 eines im Querschnitt T-förmigen Profilstranges 15 hinein. Dieser Steg 14 ist der mittlere Steg. Die beiden anderen Abschnitte des Steges erstrecken sich beidseitig des mittleren Steges 14 und liegen dicht an den Flächen der Lamellen 11 an. Der Profilstrang 15 ist aus einem flexiblen Material, vorzugsweise aus Kunststoff oder Gummi gefertigt. Im mittleren Bereich hat der an den Lamellen 11 anliegende Steg eine nutartige Einziehung 16.

Wie die Figur 3 zeigt, besteht jede Klemmvorrichtung aus zwei Winkelprofilabschnitten 17, 18 mit ungleichmäßigen Querschnitten. Dabei stehen die kürzeren Schenkel rechtwinklig zu den Lamellen 11. Die einander zugewandten Flächen der beiden Winkelprofilabschnitte 16, 18 stehen im Abstand zueinander. Jeder Winkelprofilabschnitt 17, 18 ist im dargestellten Ausführungsbeispiel durch wenigstens eine Schrauben-Mutter-Verbindung 19, 20 an der zugeordneten Lamelle 11 befestigt.

Am oberen Rand der jeweils unteren Lamelle 11 ist im dargestellten Ausführungsbeispiel noch mittels der Schrauben-Mutter-Verbindung 20 ein Winkelprofilabschnitt 21 befestigt, an dem eine Lagerbuchse 22 angesetzt ist. Dieser Winkelprofilabschnitt 21 und die Lagerbuchse 22 sind jedoch nur an den seitlichen Klemmvorrichtungen 12 vorgesehen, um einen Bolzen darin fest einzusetzen auf dessen freien Endbereich eine in der Laufschiene geführte Laufrolle frei drehbar gelagert ist.

Die Erfindung ist nicht auf das dargestellte Ausführungsbeispiel beschränkt. Wesentlich ist, dass zwischen den Lamellen 11 ein Spalt liegt, in den der Steg 14 eines Profilabschnittes 15 eingreift, wobei die beidseitig des Steges 14 liegenden Stege dichtend an den Flächen von zwei angrenzenden Lamellen 11 anliegen.

## Patentansprüche

1. Fahrzeugrolltor mit einem plattenförmigen Füllungselement (10), welches aus Lamellen (11) besteht, deren einander zugewandte, quer zur Verschieberichtung verlaufende Randbereiche durch von jeweils zwei angrenzenden Lamellen, sich über die gesamte Breite des Füllungselementes (10) erstreckende, flexible Profilstränge (15) gelenkig miteinander verbunden sind, **dadurch gekennzeichnet, dass** die Querschnitte der Profilstränge (15) T-förmig ausgebildet sind, dass die quer zur Verschieberichtung des Füllungselementes (10) stehenden Flächen der Lamellen (11) wenigstens außenseitig glattflächig sind und im Abstand zueinander stehen, dass die mittleren Stege (14) der T-förmigen Profilstränge (15) zwischen den einander zugewandt liegenden Flächen von zwei angrenzenden Lamellen (11) liegen, und dass die beidseitig der mittleren Stege (14) rechtwinklig dazu stehenden Stege der T-förmigen Profilstänge (15) dichtend an den Außenflächen von zwei amprenzenden Lamellen (11) anliegen und durch im Abstand zueinander angeordnete Klemmvorrichtungen (12) an den Lamellen (11) festgelegt sind.

2. Fahrzeugrolltor nach Anspruch 1, **dadurch gekennzeichnet, dass** die Profilstränge (15) an den äußeren, den Lamellen (11) abgewandten Seiten nutartige Einziehungen (16) aufweisen.

3. Fahrzeugrolltor nach Anspruch 1, **dadurch gekennzeichnet, dass** jede Klemmvorrichtung (12) zwei Profilabschnitte (17, 18) beinhaltet, von denen jeweils einer mittels mechanischer Verbindungselemente (19, 20) an den Randbereich der zugehörigen Lamelle (11) festgelegt ist.

4. Fahrzeugrolltor nach Anspruch 3, **dadurch gekennzeichnet, dass** die Profilabschnitte als Winkelprofilabschnitte (17, 18) ausgebildet sind, wobei die Querschnitte ungleichschenklig sind und die kürzeren Schenkel rechtwinklig zu den Lamellen (11) stehen.

5. Fahrzeugrolltor nach einem oder mehreren der vorstehenden Ansprüche, **dadurch gekennzeichnet, dass** zwei Klemmvorrichtungen (12) angrenzend an die seitlichen Stirnflächen der angrenzenden Lamellen (11) angeordnet sind, und dass an einem Profilabschnitt (21) eine Lagerbuchse (22) zur Aufnahme eines Lagerbolzens für eine Laufrolle festgelegt ist.

6. Fahrzeugrolltor nach einem oder mehreren der vorstehenden Ansprüche, **dadurch gekennzeichnet, dass** die Sicherungsvorrichtungen laderaumseitig an dem Füllungselement (10) angeordnet sind.

7. Fahrzeugrolltor nach einem oder mehreren der vorstehenden Ansprüche, **dadurch gekennzeichnet, dass** die Lamellen (11) aus Kunststoffprofilen mit glatten Außenflächen, vorzugsweise aus massiven Kunststoffprofilen gebildet sind.

## Claims

1. Rolling vehicle door having a sheet-like panel element (10) which comprises lamellae (11) of which the facing peripheral regions of in each case two adjacent lamellae, these peripheral regions running transversely to the displacement direction, are connected to one another in an articulated manner by flexible extruded profiles (15) extending over the entire width of the panel element (10), **characterized in that** the cross sections of the extruded profiles (15) are of T-shaped design, **in that** those surfaces of the lamellae (11) which are located transversely to the displacement direction of the panel element (10) are smooth at least on the outside, and are spaced apart from one another, **in that** the central crosspieces (14) of the T-shaped extruded profiles (15) are located between the facing surfaces of two adjacent lamellae (11), and **in that** those crosspieces of the T-shaped extruded profiles (15) which are located at right angles to the central crosspieces (14), on both sides of the latter, butt in a sealing manner against the outer surfaces of two adjacent lamellae (11) and are secured on the lamellae (11) by spaced-apart clamping devices (12).

2. Rolling vehicle door according to Claim 1, **characterized in that** the extruded profiles (15) have groove-like recesses (16) on the outer sides directed away from the lamellae (11).

3. Rolling vehicle door according to Claim 1, **characterized in that** each clamping device (12) contains two profile portions (17, 18), of which in each case one is secured on the peripheral region of the associated lamella (11) by means of mechanical connecting elements (19, 20).

4. Rolling vehicle door according to Claim 3, **characterized in that** the profile portions are designed as angled profile portions (17, 18), wherein the cross sections do not have equal leg lengths and the shorter legs are located at right angles to the lamellae (11).

5. Rolling vehicle door according to one or more of the preceding claims, **characterized in that** two clamping devices (12) are arranged adjacent to the lateral end surfaces of the adjacent lamellae (11), and **in that** a bearing bushing (22) for accommodating a bearing bolt for a running roller is secured on a profile portion (21).

6. Rolling vehicle door according to one or more of the preceding claims, **characterized in that** the securing devices are arranged on the loading-space side of the panel element (10).

7. Rolling vehicle door according to one or more of the preceding claims, **characterized in that** the lamellae (11) are formed from plastics-material profiles with smooth outer surfaces, preferably from solid plastics-material profiles.

## Revendications

1. Porte roulante de véhicule, comportant un élément de remplissage (10) en forme de panneau, qui est constitué de lamelles (11), les bords de deux lamelles adjacentes, orientés l'un vers l'autre et transversalement au sens de déplacement, étant assemblés l'un à l'autre de manière articulée par l'intermédiaire de bandes profilées (15) flexibles, s'étendant sur toute la largeur de l'élément de remplissage (10), **caractérisée en ce que** les sections des bandes profilées (15) sont réalisées en forme de T, **en ce que** les surfaces des lamelles (11), lesquelles sont disposées transversalement au sens de déplacement de l'élément de remplissage (10), sont lisses au moins sur la face extérieure et sont disposées à distance les unes des autres, **en ce que** les branches centrales (14) des bandes profilées (15) en forme de T sont situées entre les surfaces se faisant face de deux lamelles (11) adjacentes, et **en ce que** dans les bandes profilées (15) en forme de T, les branches de part et d'autre de la branche centrale (14) et perpendiculaires à cette dernière sont en appui étanche contre les faces extérieures de deux lamelles (11) adjacentes et sont immobilisées par des dispositifs de serrage (12), disposés à distance les uns des autres sur les lamelles (11).

2. Porte roulante de véhicule selon la revendication 1, **caractérisée en ce que** les bandes profilées (15), sur les faces extérieures détournées des lamelles (11), comportent des rétreints (16) en forme de rainures.

3. Porte roulante de véhicule selon la revendication 1, **caractérisée en ce que** chaque dispositif de serrage (12) contient deux parties profilées (17, 18), parmi lesquelles respectivement une est fixée, au moyen d'éléments d'assemblage (19, 20) mécaniques, sur la zone de bordure de la lamelle (11) associée.

4. Porte roulante de véhicule selon la revendication 3, **caractérisée en ce que** les parties profilées sont réalisées sous la forme de cornières profilées (17, 18), les sections étant réalisées avec des ailes inégales, et les ailes les plus courtes étant disposées perpendiculairement aux lamelles (11).

5. Porte roulante de véhicule selon une ou plusieurs des revendications précédentes, **caractérisée en ce que** deux dispositifs de serrage (12) sont disposés de manière adjacente aux faces frontales latérales des lamelles (11) adjacentes, et **en ce que** sur une partie profilée (21) est fixé un coussinet (22) destiné à recevoir un boulon pour un galet de roulement.

6. Porte roulante de véhicule selon une ou plusieurs des revendications précédentes, **caractérisée en ce que** les dispositifs de sécurité sont disposés sur l'élément de remplissage (10) du côté du compartiment de chargement.

7. Porte roulante de véhicule selon une ou plusieurs des revendications précédentes, **caractérisée en ce que** les lamelles (11) sont formées par des profilés en matière plastique avec des faces extérieures lisses, de préférence des profilés pleins en matière plastique.
